# EUROPEAN PATENT SPECIFICATION

(11) **EP 2 953 351 B1**
(45) Date of publication and mention of the grant of the patent: **24.07.2019**
(21) Application number: 14170717.4
(22) Date of filing: 02.06.2014
(51) Int. Cl.: H04N 7/14, H04N 7/15, G02B 27/01

(54) **Method and apparatus for eye-line augmentation during a video conference**
Verfahren und Vorrichtung zur Eyeline-Verstärkung während einer Videokonferenz
Procédé et appareil d'augmentation de ligne de vue au cours d'une conférence vidéo

(43) Date of publication of application: 09.12.2015
(73) Proprietor: Nokia Technologies Oy, 02610 Espoo (FI)
(72) Inventor: McMillan, Donald, 11853 Stockholm (SE)
(74) Representative: Nokia EPO representatives

(56) References cited:
- US-A1- 2009 189 974
- US-A1- 2012 147 131
- PRINCE, SIMON; CHEOK, ADRIAN DAVID; FARBIZ, FARZAM; WILLIAMSON, TODD; BILLINGHURST, MARK; KATO, HIROKAZU: "3-D Live: Real Time Interaction for Mixed Reality", CSCW'02, NEW ORLEANS, LOUISANA, USA, 20 November 2002 (2002-11-20), pages 364-371, XP040141448,

## Description

### TECHNOLOGICAL FIELD

An example embodiment of the present invention relates generally to video conferencing and, more particularly, to eye-line augmentation during a video conference, such as to provide for virtual eye contact between participants.

### BACKGROUND

Video conferences are commonplace. A video conference may be established between two individuals, such as a video call, a video chat or the like. Alternatively, a video conference may be established between multiple participants with a plurality of people at one location participating in a video conference with two or more people at another location.

During a video conference, a participant may view the incoming video stream that is presented upon a display, such as a display of a mobile telephone, the display of laptop or tablet computer, the display of a personal computer or the display of a video conferencing system. During the video conference, a camera may also capture video images of the participant and form an outgoing video stream that is provided to the other, remote participants of the video conference. Regardless of the implementation, the display upon which a participant views the incoming video stream of the other participants involved in the video conference and the camera that captures video images of the participant from which the outgoing video stream is formed are displaced from one another, that is, the display and the camera are located at different positions offset from one another.

During the video conference, a participant may therefore have their attention directed to the display upon which the incoming video stream is presented. Thus, the eye-line of the participant is offset from the camera that captures the video images of the participant from which the outgoing video stream is formed. As a result, the participant is generally not looking directly at the camera, but has their line of sight offset from the camera and directed, instead, toward the display. By failing to look directly at the camera and, instead, looking at the display, the outgoing video stream that is presented to the other participant(s) of the video conference make it appear that the participant is not making eye contact and, instead, has their focus diverted. Consequently, the video images of the participant who fails to make eye contact and who, instead, has their line of sight offset may appear somewhat unnatural or disconcerting relative to the manner in which people generally make eye contact while conversing in person. Reference Prince, Simon; Cheok, Adrian David; Fabriz, Farzam; Williamson, Todd; Billinghurst, Mark; Kato, Hirokazu: "3-D Live: Real Time Interaction for Mixed Reality", CSCW'02, New Orleans, Louisana, USA 20 November 2002 (2002-11-20), pages 364-371, XP040141448 discusses video calls in the context of augmented reality.

### BRIEF SUMMARY

A method, apparatus and computer program product are provided in accordance with an example embodiment in order to provide for eye-line augmentation during a video conference. In this regard, the method, apparatus and computer program product of an example embodiment permit a participant to stare more directly into the camera while concurrently viewing the display of the incoming video stream. As a result, the participant appears in the outgoing video stream to be making eye contact, at least virtually, with the other participant(s) at a remote location. The resulting video conference may therefore have a more natural feel and may be more enjoyable for the participants.

In an example embodiment, a method is provided that includes receiving an incoming video stream and determining a position of a camera configured to capture video images of a participant. The method of this example embodiment also causes a representation of the incoming video stream to be overlaid upon the position of the camera by a head-mounted augmented reality display worn by the user. As such, the focal point for the participant within the representation of the incoming video stream coincides with the position of the camera, thereby causing the participant to appear to be making eye contact with the other, remote participants in the video conference.
The method of an example embodiment may also include determining the focal point for the participant within the representation of the incoming video stream by detecting the face of another participant in the incoming video stream. Additionally or alternatively, the method of an example embodiment may determine the focal point for the participant within the representation of the incoming video stream by determining an eye position of another participant in the incoming video stream. In this embodiment, the method may determine the eye position of another participant in the incoming video stream by determining the eye position of another participant who is speaking in the incoming video stream. The method of an example embodiment may also include determining the focal point for the participant within the representation of the incoming video stream based upon the number of participants and their relative position within the incoming video stream. The method of an example embodiment may determine the position of the camera based upon one or more of a video image of the camera captured by the head-mounted augmented reality display, an outgoing video stream or a sensor output indicative of the position of the camera.

After the camera has initially captured video images of the user, the method of an example embodiment may also determine that a second camera is going to subsequently capture video images of the user. In this example embodiment, the method may also include causing the representation of the incoming video stream to be overlaid upon the position of the second camera by the head-mounted augmented reality display. As such, the focal point for the user within the representation of the incoming video stream may thereafter coincide with the position of the second camera.

In another example embodiment, an apparatus is provided that includes means for receiving an incoming video stream and means for determining a position of a camera configured to capture video images of a participant. The apparatus of this example embodiment also includes means for causing a representation of the incoming video stream to be overlaid upon the position of the camera by a head-mounted augmented reality display worn by the participant. As such, a focal point for the participant within the representation of the incoming video stream coincides with the position of the camera such that the participant appears to be making eye contact with another participant of the video conference.

The apparatus of an example embodiment may also include means for determining the focal point for the participant within the representation of the incoming video stream by detecting a face of another participant in the incoming video stream. Additionally or alternatively, the apparatus may also include means for determining the focal point for the participant within the representation of the incoming video stream by determining an eye position of another participant in the incoming video stream. In this regard, the means for determining the eye position of another participant in the incoming video stream may include means for determining the eye position of another participant who is speaking in the incoming video stream. The apparatus of an example embodiment may also include means for determining the focal point for the participant within the representation of the incoming video stream based upon a number of participants and their relative position within the incoming video stream. In an example embodiment, the means for determining a position of the camera may include means for determining the position of the camera based upon one or more of a video image of the camera captured by the head-mounted augmented reality display, and outgoing video stream or sensor output indicative of the position of the camera.

After the camera has initially captured video images of the participant, the apparatus of an example embodiment may also include means for determining that a second camera is going to subsequently capture video images of the participant. The apparatus of this example embodiment may also include means for causing the representation of the incoming video stream to be overlaid upon the position of the second camera by the head-mounted augmented reality display such that the focal point for the participant within the representation of the incoming video stream coincides with the position of the second camera.

In a further example embodiment, a computer program product is provided that includes at least one computer-readable storage medium having computer-executable program code instructions stored therein with the computer-executable program code instructions, including program code instructions to, when executed by at least one processor, cause an incoming video stream to be received and a position of a camera that is configured to capture video images of a participant to be determined. The computer-executable program code instructions of this example embodiment also include program code instructions to, when executed by the at least one processor, cause a representation of the incoming video stream to be caused to be overlaid upon the position of the camera by a head-mounted augmented reality display worn by the participant. As such, the focal point for the participant within the representation of the incoming video stream will coincide with the position of the camera.

In yet another example embodiment, an apparatus is provided that includes at least one processor and at least one memory storing computer program code with the at least one memory and stored computer program code being configured, with the at least one processor, to cause the apparatus to at least receive an incoming video stream and to determine a position of a camera configured to capture video images of a participant. The at least one memory and stored computer program code are also configured, with the at least one processor, to cause the apparatus of this example embodiment to cause a representation of the incoming video stream to be overlaid upon the position of the camera by a head-mounted augmented reality display worn by the participant. As such, the focal point for the participant within the representation of the incoming video stream will coincide with the position of the camera.

The scope of the invention is determined by the appended method claim 1, computer program product claim 5, apparatus claim 6 and their respective dependent claims.

### BRIEF DESCRIPTION OF THE DRAWINGS

Having thus described aspects of the present disclosure in general terms, reference will now be made to the accompanying drawings, which are not necessarily drawn to scale, and wherein:

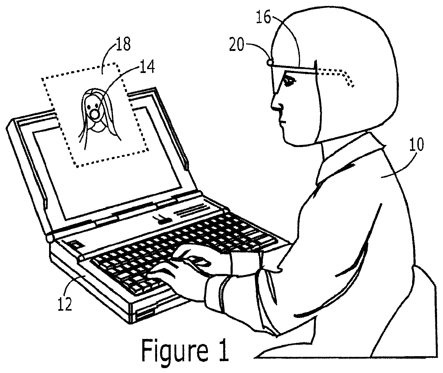

Figure 1 is a perspective view of a participant in a video conference wearing a head-mounted augmented reality display that causes a representation of the incoming video stream to be overlaid upon the position of a camera embodied by a computing device in accordance with an example embodiment of the present invention;

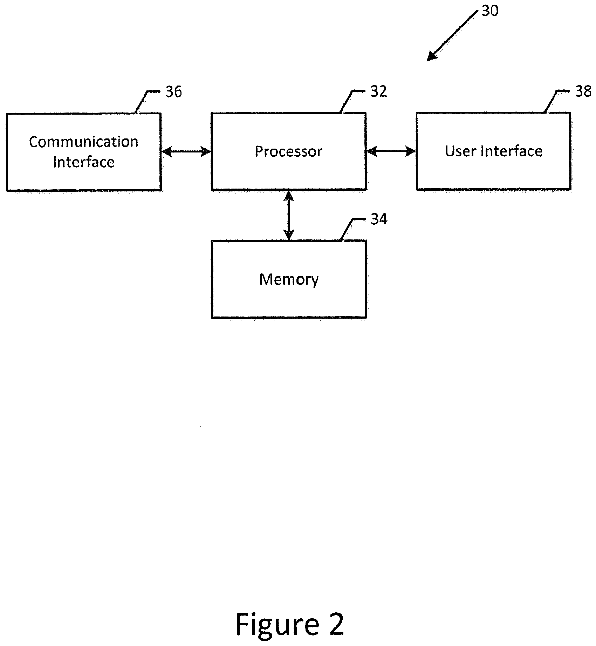

Figure 2 is a block diagram of an apparatus that may be specifically configured in accordance with an example embodiment of the present invention;

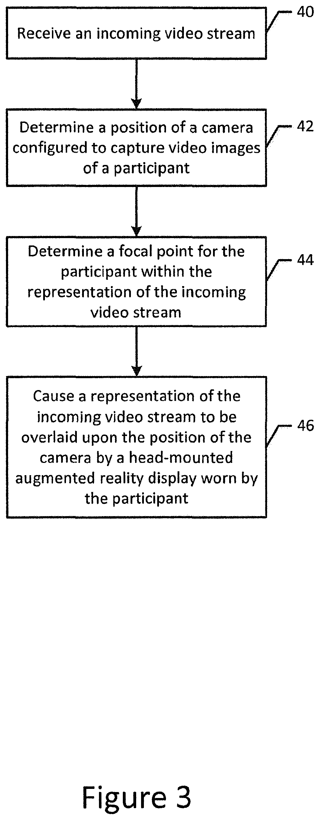

Figure 3 is a flowchart illustrating operations performed, such as by the apparatus of Figure 2, in accordance with an example embodiment of the present invention;

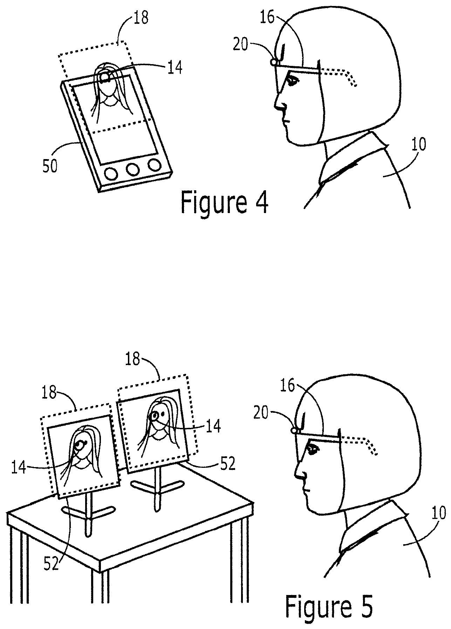

Figure 4 is a perspective view of a participant in a video conference wearing a head-mounted augmented reality display that causes a representation of the incoming video stream to be overlaid upon the position of a camera embodied by a mobile device in accordance with an example embodiment of the present invention;
Figure 5 is a perspective view of a participant in a video conference wearing a head-mounted augmented reality display that causes a representation of the incoming video stream to be overlaid upon the position of a camera associated with a display board in accordance with an example embodiment of the present invention;

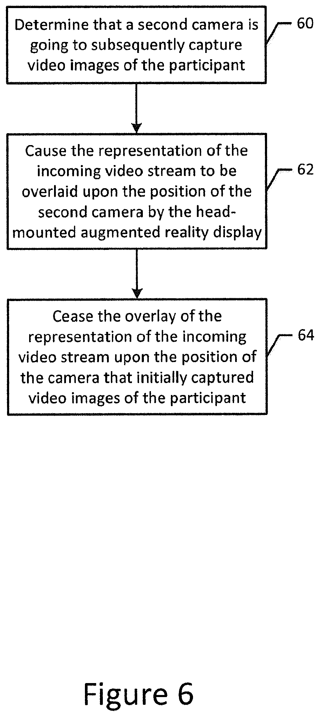

Figure 6 is a flow chart illustrating operations performed, such as by the apparatus of Figure 2, in accordance with another example embodiment of the present invention; and

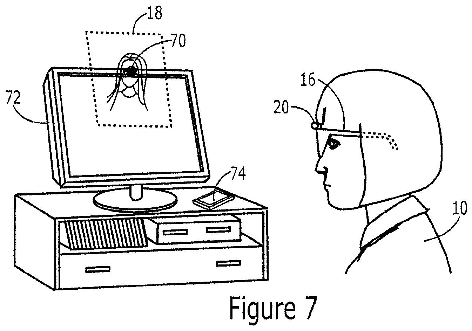

Figure 7 is a perspective view of a participant in a video conference wearing a head-mounted augmented reality display that causes a representation of the incoming video stream to be overlaid upon the position of a camera embodied by a television system in accordance with an example embodiment of the present invention.

### DETAILED DESCRIPTION

Some embodiments of the present invention will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the spirit and scope of embodiments of the present invention.

Additionally, as used herein, the term 'circuitry' refers to (a) hardware-only circuit implementations (for example, implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device, and/or other computing device.

As defined herein, a "computer-readable storage medium," which refers to a non-transitory physical storage medium (for example, volatile or non-volatile memory device), can be differentiated from a "computer-readable transmission medium," which refers to an electromagnetic signal.

A method, apparatus and computer program product are provided in accordance with an example embodiment of the present invention in order to provide for eye-line augmentation during a video conference. By providing for eye-line augmentation, a participant in a video conference may appear to make eye contact, at least virtually, with another participant in the video conference at a remote location. The resulting video conference may therefore appear more natural and the user experience of the participants in the video conference may be enhanced.

As described herein, a video conference may be supported by any of a wide variety of electronic devices that capture and transmit video images of a participant at a first location and that receive and display video images of other participant(s) at a second location, typically remote from the first location. As shown by way of example in Figure 1, a participant 10 may utilize a computing device 12, such as a personal computer, a laptop computer, a tablet computer, a computer workstation or the like, during a video conference. In this example embodiment, the computing device may include or otherwise be associated with a camera 14 for capturing a video image of the participant from which an outgoing video stream is formed that includes the video images of the participant. As also shown in Figure 1, the participant may also wear a head-mounted augmented reality display 16 to receive an incoming video stream of one or more other participants and to cause a representation of the incoming video stream to be displayed, such as indicated by the image 18 outlined with dashed lines in Figure 1. As shown in Figure 1 and as will be described hereinafter, the representation of the incoming video stream may be overlaid upon the position of the camera by the head-mounted augmented reality display worn by the participant. Thus, the focal point of the participant within the representation of the incoming video stream will coincide with the position of the camera. Thus, by focusing upon the display of the incoming video stream, the participant will also be looking into te camera and, as such, will appear to be making eye contact, at least virtually, with another participant in the video conference.

As shown in Figure 2, an apparatus 30 that may be specifically configured in accordance with an example embodiment of the present invention is depicted. The apparatus may be embodied by the head-mounted augmented reality display 16 worn by the participant 10. Alternatively, the apparatus may be embodied by the camera 14 or the electronic device 12 that incorporates the camera that captures video images of the participant. In another example, the apparatus may be embodied by a different electronic device, such as a mobile terminal, e.g., a mobile telephone, a smartphone, a personal digital assistant (PDA) or the like, or another type of computing device. Regardless of the manner in which the apparatus is embodied, the apparatus may be in communication with the head-mounted augmented reality display and, in some embodiments, with the camera and/or the electronic device that embodies the camera.

Regardless of the manner in which the apparatus 30 is embodied, the apparatus configured to provide eye-line augmentation during video conferencing in accordance with an example embodiment may include or otherwise be in communication with a processor 32 and a memory device 34, and optionally a communication interface 36 and a user interface 38. In some embodiments, the processor (and/or co-processors or any other processing circuitry assisting or otherwise associated with the processor) may be in communication with the memory device via a bus for passing information among components of the apparatus. The memory device may be non-transitory and may include, for example, one or more volatile and/or non-volatile memories. In other words, for example, the memory device may be an electronic storage device (for example, a computer readable storage medium) comprising gates configured to store data (for example, bits) that may be retrievable by a machine (for example, a computing device like the processor). The memory device may be configured to store information, data, content, applications, instructions, or the like for enabling the apparatus to carry out various functions in accordance with an example embodiment of the present invention. For example, the memory device could be configured to buffer input data for processing by the processor. Additionally or alternatively, the memory device could be configured to store instructions for execution by the processor.

As noted above, the apparatus 30 may be embodied by a head-mounted augmented reality display 16, a camera 14 or the computing device 12 that incorporates the camera or by another electronic device. However, in some embodiments, the apparatus may be embodied as a chip or chip set. In other words, the apparatus may comprise one or more physical packages (for example, chips) including materials, components and/or wires on a structural assembly (for example, a circuit board). The structural assembly may provide physical strength, conservation of size, and/or limitation of electrical interaction for component circuitry included thereon. The apparatus may therefore, in some cases, be configured to implement an embodiment of the present invention on a single chip or as a single "system on a chip." As such, in some cases, a chip or chipset may constitute means for performing one or more operations for providing the functionalities described herein.

The processor 32 may be embodied in a number of different ways. For example, the processor may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor may include one or more processing cores configured to perform independently. A multi-core processor may enable multiprocessing within a single physical package. Additionally or alternatively, the processor may include one or more processors configured in tandem via the bus to enable independent execution of instructions, pipelining and/or multithreading.

In an example embodiment, the processor 32 may be configured to execute instructions stored in the memory device 34 or otherwise accessible to the processor. Alternatively or additionally, the processor may be configured to execute hard coded functionality. As such, whether configured by hardware or software methods, or by a combination thereof, the processor may represent an entity (for example, physically embodied in circuitry) capable of performing operations according to an embodiment of the present invention while configured accordingly. Thus, for example, when the processor is embodied as an ASIC, FPGA or the like, the processor may be specifically configured hardware for conducting the operations described herein. Alternatively, as another example, when the processor is embodied as an executor of software instructions, the instructions may specifically configure the processor to perform the algorithms and/or operations described herein when the instructions are executed. However, in some cases, the processor may be a processor of a specific device (for example, the client device 10 and/or a network entity) configured to employ an embodiment of the present invention by further configuration of the processor by instructions for performing the algorithms and/or operations described herein. The processor may include, among other things, a clock, an arithmetic logic unit (ALU) and logic gates configured to support operation of the processor.

The apparatus 30 of the illustrated embodiment may also optionally include a communication interface 36 that may be any means such as a device or circuitry embodied in either hardware or a combination of hardware and software that is configured to receive and/or transmit data from/to a communications device in communication with the apparatus. For example, the communication interface may be configured to communicate with a head-mounted augmented reality display 16, a camera 14, an electronic device 12 that incorporates the camera or another electronic device depending upon the manner in which the apparatus is embodied. In this regard, the communication interface may include, for example, an antenna (or multiple antennas) and supporting hardware and/or software for enabling communications with a wireless communication network. Additionally or alternatively, the communication interface may include the circuitry for interacting with the antenna(s) to cause transmission of signals via the antenna(s) or to handle receipt of signals received via the antenna(s). In some environments, the communication interface may alternatively or also support wired communication.

The apparatus 30 of an example embodiment may optionally also include or otherwise be in communication with a user interface 38. The user interface may include a touch screen display, a keyboard, a mouse, a joystick or other input/output mechanisms. In some embodiments, the user interface, such as a display, speakers, or the like, may also be configured to provide output to the user. In an example embodiment in which the apparatus does include the user interface, the processor 32 may comprise user interface circuitry configured to control at least some functions of one or more input/output mechanisms. The processor and/or user interface circuitry comprising the processor may be configured to control one or more functions of one or more input/output mechanisms through computer program instructions (for example, software and/or firmware) stored on a memory accessible to the processor (for example, memory device 34, and/or the like).

Referring now to Figure 3, the operations performed, such as by the apparatus 40 of Figure 2, in accordance with an example embodiment in order to provide for eye-line augmentation during a video conference are depicted. As shown in block 30, the apparatus may include means, such as the processor 32, the communication interface 36 or the like, for receiving an incoming video stream. The incoming video stream includes video images of one or more other participants in the video conference. As shown in block 42 of Figure 3, the apparatus may also include means, such as the processor or the like, for determining the position of the camera 14 configured to capture video images of the participant 10. As illustrated in Figure 1, the camera may be embodied by a computing device 12 that is configured to support video conferencing. Although generically referenced herein as a camera, the camera includes any type of image capturing device configured to capture a plurality of video images of the participant including a dedicated camera, a video recorder or another type of electronic device that includes camera functionality, such as shown in Figure 1.

The apparatus 30, such as the processor 32, may be configured to determine the position of the camera 14 in various manners. For example, the camera may have a fixed location, such that the position of the camera is predefined. In this example embodiment, the apparatus, such as the processor, may determine the position of the camera by referencing the predefined location of the camera, such as may be stored by memory device 34. Alternatively, the apparatus, such as the processor, may be configured to determine the position of the camera based upon a sensor output indicative of the position of the camera. In this regard, the camera or a computing device 12 that embodies the camera may include a positioning system, such as a global positioning system (GPS) device, that may provide sensor output indicative of the position of the camera.

Still further, the apparatus 30, such as the processor 32, may be configured to determine the position of the camera 14 based upon a video image of the camera captured by the head-mounted augmented reality display 16 worn by the participant 10. In this example embodiment, the head-mounted augmented reality display may have any of a wide variety of form factors, such as the eyeglasses depicted in the illustrated embodiment. In addition to being configured to cause a representation 18 of the incoming video stream to be presented as described below, the head-mounted augmented reality display that is worn by the participant may include a camera 20 configured to capture an image of the field of view of the participant. Within the image captured by the camera of a head-mounted augmented reality display of this embodiment may be the camera that is configured to capture video images of the participant from which the outgoing video stream is formed. As such, the apparatus, such as the processor, may be configured to review the video image captured by the camera of the head-mounted augmented reality display and to identify or otherwise recognize the camera that is configured to capture video images of the participant, such as by an image recognition technique. Once the camera that is configured to capture video images of the participant from which the outgoing video stream is formed is identified, the apparatus, such as the processor, may be configured to determine the position of the camera relative to the participant and, more particularly, relative to the head-mounted augmented reality display worn by the participant.

In yet another example embodiment, the apparatus 30, such as the processor 32, may be configured to determine the position of the camera 14 based upon the outgoing video stream formed of the video images of the participant 10 captured by the camera. In this example embodiment, the apparatus, such as the processor, may be configured to analyze the outgoing video stream and, in particular, the representation of the participant within the video images of the outgoing video stream in order to determine the relative position of the participant with respect to the camera that captured the video images and, conversely, the relative position of the camera that captured the video images to the participant. For example, the apparatus, such as the processor, may be configured to identify the relative position the camera to the participant within the video images of the outgoing video stream based upon the participant's head alignment, face detection and/or speaker detection, such as based upon the direction from which the voice of the participant originates.

Regardless of the manner in which the position of the camera 14 relative to the participant 10 is determined, the apparatus 30, such as the processor 32, may determine the distance from the participant to the camera and, in one embodiment, the angle from the participant to the camera, thereby defining the position of the camera. Based thereupon and as shown in block 44 of Figure 3, the apparatus may include means, such as the processor, communication interface 36, the user interface 38 or the like, for causing a representation 18 of the incoming video stream to be overlaid upon the position of the camera by the head-mounted augmented reality display 16 worn by the participant. As such, the focal point for the participant within the representation of the incoming video stream that is overlaid upon the position of the camera may advantageously coincide with the position of the camera. Consequently, the outgoing video stream that includes video images of the participant will correspondingly appear as though the participant is making eye contact, at least virtually, with another participant of the video conference.

In regards to causing the representation 18 of the incoming video stream to be overlaid upon the position of the camera 14 by the head-mounted augmented reality display 16, the apparatus 30 of an example embodiment may also include means, such as the processor 32 or the like, for determining the focal point for the participant 10 within the representation of the incoming video stream. In an example embodiment, the apparatus may include means, such as the processor or the like, for detecting a face of another participant in the incoming video stream. In order to increase the appearance that the participant is communicating directly with the other participant in the incoming video stream, the representation of the incoming video stream may be caused by the processor to be overlaid upon the position of the camera such that the face of the other participant in the incoming video stream is overlaid upon the position of the camera. Thus, as the participant looks at the face of the other participant in the representation of the video stream that is presented by the head-mounted augmented reality display worn by the participant, the participant is also staring directly at the camera such that the participant appears to be making eye contact with the other participant.

Additionally or alternatively, the apparatus 30 may include means, such as the processor 32 or the like, for determining the focal point for the participant 10 within the representation 18 of the incoming video stream by determining an eye position of another participant in the incoming video stream. Thus, in addition to or instead of detecting the face of the other participant in the incoming video stream, the apparatus, such as the processor, may provide for even more precision by determining the eye position of the other person in the incoming video stream. Further, in an instance in which the incoming video stream includes representations of multiple other participants, the apparatus, such as the processor, of this example embodiment may be configured to determine the eye position of not just any one of the other participants, but the eye position of the other participant who is speaking in the incoming video stream. In this example embodiment, the apparatus, such as the processor, may be configured to determine the other participant who is speaking, such as based upon the direction from which the sound originates relative to the respective positions of the other participants within the incoming video stream, such that the apparatus, such as the processor, thereafter able to detect the face and/or the eye position of the other participant who is speaking in the incoming video stream. As such, the apparatus, such as the processor, of this example embodiment may be configured to cause the representation of the incoming video stream to be overlaid upon the position of the camera 14 such that the eyes of the other participant, such as the eyes of the other participant who is speaking, are overlaid upon the position of the camera by the head-mounted augmented reality display 16 such that as the participant stares at the eyes of the other participant who is speaking, the participant also stares directly into the camera such that the representation of the participant in the outgoing videos stream appears to have established eye contact with the other participant who is speaking.

The apparatus 30, such as the processor 32, may be configured to determine the focal point for the participant within the representation 18 of the incoming video stream in a variety of other manners and based upon one or more other factors. For example, in an embodiment in which the incoming video stream includes representations of a plurality of other participants, the apparatus, such as the processor, may be configured to determine the focal point for the participant based upon the number of other participants and their relative positions within the incoming video stream. In this regard, the apparatus, such as the processor, may be configured to determine the focal point for the participant within the representation of the incoming video stream to coincide with the average position of the plurality of other participants within the incoming video stream. Additionally or alternatively, the apparatus, such as the processor, may be configured to determine the focal point for the participant within the representation of the incoming video stream based at least partially upon one or more predefined preferences of the participant. For example, an indication may have been previously provided, such as by the participant, by a conference services system or the like, that designates that the participant always wishes to appear to look at a particular person who may be identified by image recognition within the incoming video stream. Alternatively, the indication of this example embodiment may designate that the participant always wishes to appear to look at a predefined location, such as the head of the table, within the representation of the incoming video stream.

As shown in Figure 1, a participant 10 may be engaged in a video conference with another participant who may be at a remote location. The representation 18 of the incoming video stream may be caused to be overlaid by the head-mounted augmented reality display 16 upon the position of the camera 14 embodied by the computing device 12 of this example embodiment along the upper edge of the display screen. As shown, the representation of the incoming video stream may be overlaid upon the position of the camera such that the face of the other participant is overlaid upon the position of the camera. As such, the participant may stare at the face of the other participant and, as such, may also stare directly into the camera so as to appear to make eye contact with the other participant.

As shown in Figure 4, the camera 14 for capturing video images of the participant may alternatively be embodied by a mobile device 50, such as a mobile telephone, a smartphone, a PDA or the like. As described above, however, the head-mounted augmented reality display 16 worn by the participant may be caused to overlay a representation 18 of the incoming video stream upon the position of the camera of the mobile device. In this regard, the camera of the mobile device is positioned along an upper edge of the mobile device. As also illustrated in Figure 4, the apparatus 30, such as the processor 32, may have determined the eye position of the other participant in the incoming video stream and, as such, may have caused the representation of the incoming video stream to be overlaid upon the position of the camera such that the eye position of the other participant coincides with the position of the camera. Thus, the participant may stare into the eyes of the other participant and, in turn, may stare at the camera of the mobile device such that the participant appears to make eye contact with the other participant.

Figure 5 illustrates another example embodiment that includes a pair of display boards 52 upon which representations 18 of the incoming video stream may be presented. Although two display boards illustrated, the video conference system of Figure 5 may include any number of display boards, such as one or more display boards. At least one or each of the display boards may include a camera, such as indicated by the circles 14. As such, the apparatus 30, such as the processor 32, may be configured to cause the representation of the incoming video stream to be overlaid at least partially upon each display board so as to be correspondingly overlaid upon the position of the camera. In this example embodiment, the apparatus, such as the processor, is configured to determine the eye position of the other participant in the incoming video stream. As such, the apparatus, such as the processor, may also be configured to cause the representation of the incoming video stream to be overlaid upon the position of the camera such that the eye position of the other participant coincides with the position of the camera. Thus, the participant may again appear to be staring into the eyes of the other participant and making eye contact with the other participant as a result of concurrently staring at the camera due to the manner in which the representation of the incoming video stream is presented upon the display boards.

In another example embodiment, a plurality of cameras 14 may be disposed in different locations and at least some of the cameras may be associated with different electronic devices. Each camera may be capable of capturing video images of the participant that may be utilized in a video conference, such as a result of the plurality of cameras being configured to communicate, such as via a network connection, with the apparatus 30, a conference server or other computing device configured to support the video conference. In this example embodiment, a predefined order of preference may be established which may be utilized by the apparatus, such as the processor, to determine which camera will capture the video images of the participant for use during the video conference at different points in time within the video conference. The predefined order of preference may be based upon proximity, such that of the cameras that include the participant within their field of view, the camera that is closest to the participant is caused to capture video images of the participant from which the outgoing video stream is formed. However, the predefined order of preference may be based upon other factors, such as the resolution of the video images captured by the cameras and/or the resolution with which the representation of the incoming video stream may be presented. In this example embodiment, from among the cameras that include the participant within their field of view, the camera that captures video images with the greatest resolution has the highest preference with other cameras having relatively lower levels of preference order based upon the resolution of the video images captured by the various cameras.

In this example embodiment, the apparatus 30, such as the processor 32, may therefore be configured to determine the one or more candidate cameras that are capable of capturing video images of the participant 10 from which the outgoing video stream may be formed. For example, the apparatus, such as the processor, may determine the position of the participant and the relative positions of the cameras such that the cameras that are close enough to the participant, such as within a predefined distance of the participant, so that participant would be in the field of view of the cameras may be identified candidate cameras. From among the plurality of candidate cameras, the apparatus, such as the processor, may be configured to identify the camera having the greatest preference, such as a camera that is the closest or the camera having the greatest resolution. Thereafter, the camera with the greatest preference from among the plurality of candidate cameras may be caused to capture video images of the participant from which the outgoing video stream is formed. In this example embodiment, the head-mounted augmented reality display 16 may also be caused to overlay a representation 18 of the incoming video stream upon the position of the camera 14 that is capturing the video images of the participant.

In an instance in which the participant 10 changes location and/or the pool of candidate camera changes, the apparatus 30, such as the processor 32, may determine from among the current group of candidate cameras the camera 14 having the greatest preference. In an instance in which the camera having the greatest preference has changed, the camera now having the greatest preference may be caused to capture video images of the participant from which the outgoing video stream is formed and the camera that previously captured video images of the participant may no longer be utilized to form the outgoing video stream. Additionally, the head-mounted augmented reality display 16 may be caused to overlay the representation 18 of the incoming video stream upon a different position, that is, the position of the camera that is now capturing video images of the participant that form the outgoing video stream. Thus, the method, apparatus, and computer program product of this example embodiment may provide flexibility in terms of the position of the participant relative to various cameras, but may do so in such a manner that the camera that captures the video images from which the outgoing video stream will be formed will produce an outgoing video stream of relatively high quality by utilizing the camera that provides the greatest resolution.

Referring now to Figure 6, after a camera 14 has initially captured video images of the participant 10 from which the outgoing video stream has been formed, the apparatus 30 of an example embodiment may include means, such as the processor 32 or the like, for determining that a second camera is going to subsequently capture video images of the participant. See block 60. For example, a participant with a mobile device that includes a camera may have initially utilized the camera embodied by the mobile device to capture the video images of the participant that form the outgoing video stream. However, once the participant moves into a room that includes another camera that is capable of obtaining video images of the participant with a greater resolution, such as the camera 70 associated with a home entertainment system 72 as shown in Figure 7, the apparatus, such as the processor, may determine that the other camera is now going to subsequently capture video images of the participant. Relative to the illustrated embodiment, the apparatus, such as the processor, may determine that the camera associated with the home entertainment system may capture the video images of the participant once the participant is proximate the home entertainment system even though the mobile device 74 continues to remain in the proximity of the participant.

As described above, the camera 14, 70 that is to capture video images of the participant 10 may be determined in various manners. By way of further example, the apparatus 30, such as the processor 32, of an example embodiment may be additionally or alternatively be configured determine a natural line-of-sight and to select the camera with which the participant has a natural line-of-sight. In another embodiment, the apparatus, such as the processor, may select the camera so as to ensure that the speaker's face, such as in an instance in which there are multiple speakers or the speaker is moving, is in the frame of the video. Further, the apparatus, such as the processor, may select the camera that is to capture video images of the participant in a manner that manages bandwidth or other technical constraints. In yet another example embodiment, the apparatus, such as the processor, may be configured to select the camera so as to react to the participant's gestures or speech to include another object in the frame of the video.

As such, the apparatus 30 of this example embodiment may include means, such as the processor 32 or the like, for causing the representation of the incoming video stream to be overlaid upon the position of the second camera 70 by the head-mounted augmented reality display 16. See block 62 of Figure 6. Correspondingly, the apparatus of this example embodiment may include means, such as the processor or the like, for ceasing the overlay of the representation of the incoming video stream upon the position of the camera 14 that previously captured the video images of the participant 10. As such, the focal point of the participant within the representation of the incoming video stream will move from the camera that initially captured video images of the participant (upon which the representation of the incoming video stream was previously overlaid) so as to coincide with the position of the second camera (upon which the representation of the incoming video stream will now be overlaid). Thus, even though the camera that captures the video images of the participant may change during a video conference, the repositioning of the representation of the incoming video stream so as to be overlaid upon the position of the currently active camera may facilitate the participant continuing to look at the active camera by looking at the representation of the video stream such that the participant continues to appear to make eye contact with other remote participants.

A method, apparatus 30 and computer program product are therefore provided in accordance with an example embodiment in order to provide for eye-line augmentation during a video conference. The method, apparatus and computer program product of an example embodiment permit a participant 10 to stare more directly into the camera 14, 70 while concurrently viewing a representation 18 of the incoming video stream. As a result, the participant appears in the outgoing video stream to be making eye contact, at least virtually, with the other participant(s) at a remote location, thereby providing for a more natural feel such that the video conference may be more enjoyable for the participants.

As described above, Figures 3 and 6 illustrate flowcharts of an apparatus 30, method and computer program product according to example embodiments of the invention. It will be understood that each block of the flowcharts, and combinations of blocks in the flowcharts, may be implemented by various means, such as hardware, firmware, processor, circuitry, and/or other communication devices associated with execution of software including one or more computer program instructions. For example, one or more of the procedures described above may be embodied by computer program instructions. In this regard, the computer program instructions which embody the procedures described above may be stored by a memory device 34 of an apparatus employing an embodiment of the present invention and executed by a processor 32 of the apparatus. As will be appreciated, any such computer program instructions may be loaded onto a computer or other programmable apparatus (for example, hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowcharts support combinations of means for performing the specified functions and combinations of operations for performing the specified functions for performing the specified functions. It will also be understood that one or more blocks of the flowcharts, and combinations of blocks in the flowcharts, can be implemented by special purpose hardware-based computer systems which perform the specified functions, or combinations of special purpose hardware and computer instructions.

In some embodiments, certain ones of the operations above may be modified or further amplified. Furthermore, in some embodiments, additional optional operations may be included. Modifications, additions, or amplifications to the operations above may be performed in any order and in any combination.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A method comprising:
receiving (40) an incoming video stream;
determining (42) a position of a camera (14) configured to capture video images of a participant (10);
causing (46) a representation (18) of the incoming video stream, which includes representations of multiple other participants, to be overlaid upon the position of the camera (14) by a head-mounted augmented reality display (16) worn by the participant (10) such that a focal point for the participant (10) within the representation (18) of the incoming video stream coincides with the position of the camera (14);
determining that one of the multiple other participants is speaking based upon a direction from which sound originates relative to the respective positions of the multiple other participants within the incoming video stream; and
determining the eye position of the other participant who is speaking in the incoming video stream such that the eyes of the other participant who is speaking are overlaid upon the position of the camera by the head-mounted augmented reality display.

2. A method according to Claim 1 further comprising determining (44) the focal point for the participant (10) within the representation (18) of the incoming video stream based upon a number of other participants and their relative positions within the incoming video stream.

3. A method according to any one of Claims 1 to 2 wherein determining (42) a position of the camera (14) comprises determining the position of the camera based upon one or more of a video image of the camera (14) captured by the head-mounted augmented reality display (16), an outgoing video stream or a sensor output indicative of the position of the camera (14).

4. A method according to any one of Claims 1 to 3 further comprising:
after the camera (14) has initially captured video images of the participant (10), determining (60) that a second camera (70) is going to subsequently capture video images of the participant; and
causing (62) the representation (18) of the incoming video stream to be overlaid upon the position of the second camera (70) by the head-mounted augmented reality display (16) such that the focal point for the participant (10) within the representation (18) of the incoming video stream coincides with the position of the second camera (70).

5. A computer program product comprising at least one computer-readable storage medium (34) having computer-executable program code instructions stored therein, the computer-executable program code instructions comprising program code instructions to, when executed by at least one processor (32), cause performance of the method of any one of Claims 1 to 4.

6. An apparatus (30) comprising:
means for receiving an incoming video stream;
means for determining a position of a camera (14) configured to capture video images of a participant (10);
means for causing a representation (18) of the incoming video stream, which includes representations of multiple other participants, to be overlaid upon the position of the camera (14) by a head-mounted augmented reality display (16) worn by the participant (10) such that a focal point for the participant (10) within the representation (18) of the incoming video stream coincides with the position of the camera (14);
means for determining that one of the multiple other participants is speaking based upon a direction from which sound originates relative to the respective positions of the multiple other participants within the incoming video stream; and
determining the eye position of the other participants who is speaking in the incoming video stream such that the eyes of the other participant who is speaking are overlaid upon the position of the camera by the head-mounted augmented reality display.

7. An apparatus (30) according to Claim 6 further comprising means for determining the focal point for the participant (10) within the representation (18) of the incoming video stream based upon a number of participants and their relative positions within the incoming video stream.

8. An apparatus (30) according to any one of Claims 6 to 7 wherein the means for determining a position of the camera (14) comprises means for determining the position of the camera (14) based upon one or more of a video image of the camera (14) captured by the head-mounted augmented reality display (16), an outgoing video stream or a sensor output indicative of the position of the camera (14).

9. An apparatus (30) according to any one of Claims 6 to 8 further comprising:
after the camera (14) has initially captured video images of the participant (10), means for determining that a second camera (70) is going to subsequently capture video images of the participant (10); and
means for causing the representation (18) of the incoming video stream to be overlaid upon the position of the second camera (70) by the head-mounted augmented reality display (16) such that the focal point for the participant (10) within the representation of the incoming video stream coincides with the position of the second camera (70).

## Patentansprüche

1. Verfahren, umfassend:
Empfangen (40) eines eingehenden Videostreams;
Ermitteln (42) einer Position einer Kamera (14), die konfiguriert ist zum Erfassen von Videobildern eines Teilnehmers (10);
Veranlassen (46) einer Darstellung (18) eines eingehenden Videostreams, der Darstellungen von mehreren weiteren Teilnehmern enthält, die durch eine am Kopf befestigte vergrößernden Realitätsanzeige (16), die von dem Teilnehmer (10) getragen werden, auf die Position der Kamera (14) überlagert wird, sodass ein Blickpunkt für den Teilnehmer (10) innerhalb der Darstellung (18) des eingehenden Videostreams mit der Position der Kamera (14) übereinstimmt;
Ermitteln aufgrund einer Richtung, aus welcher ein Ton in Bezug auf die jeweiligen Positionen der mehreren weiteren Teilnehmer innerhalb des eingehenden Videostreams kommt, dass einer von den mehreren Teilnehmern am Sprechen ist; und
Ermitteln der Augenstellung des weiteren Teilnehmers, der in dem eingehenden Videostream am Sprechen ist, sodass die Augen des weiteren Teilnehmers, der am Sprechen ist, durch die am Kopf befestigte vergrößernden Realitätsanzeige auf die Position der Kamera überlagert werden.

2. Verfahren nach Anspruch 1, das außerdem ein Ermitteln (44) des Blickpunkts für den Teilnehmer (10) innerhalb der Darstellung (18) des eingehenden Videostreams aufgrund einer Anzahl von weiteren Teilnehmern und ihrer relativen Positionen innerhalb des eingehenden Videostreams umfasst.

3. Verfahren nach einem der Ansprüche 1 bis 2, wobei das Ermitteln (42) einer Position der Kamera (14), ein Ermitteln der Position der Kamera aufgrund eines oder mehrerer Videobilder der Kamera (14), die durch die am Kopf befestigte vergrößernden Realitätsanzeige (16) erfasst wurden, aufgrund eines ausgehenden Videostreams oder aufgrund einer Sensorausgabe umfasst, welche die Position der Kamera (14) anzeigt.

4. Verfahren nach einem der Ansprüche 1 bis 3, das außerdem umfasst:
nachdem die Kamera (14) anfänglich Videobilder des Teilnehmers (10) erfasst hat, Ermitteln (60), dass eine zweite Kamera (70) nachfolgend Videobilder des Teilnehmers erfassen wird; und
Veranlassen (62) der Darstellung (18) des eingehenden Videostreams, der durch die am Kopf befestigte vergrößernden Realitätsanzeige (16) auf die Position der Kamera (70) überlagert wird, sodass der Blickpunkt für den Teilnehmer (10) innerhalb der Darstellung (18) des eingehenden Videostreams mit der Position der zweiten Kamera (70) übereinstimmt.

5. Computerprogrammprodukt, das mindestens ein computerlesbares Speichermedium (34) umfasst, das darin gespeicherte in einem Computer ausführbare Programmcodebefehle aufweist, wobei die Programmcodebefehle, die in einem Computer ausführbar sind, Programmcodebefehle umfassen, die, wenn sie von mindestens einem Prozessor (32) ausgeführt werden, das Ausführen des Verfahrens nach einem der Ansprüche 1 bis 4 veranlassen.

6. Vorrichtung (30), umfassend:
ein Element zum Empfangen eines eingehenden Videostreams;
ein Element zum Ermitteln einer Position einer Kamera (14), die konfiguriert ist zum Erfassen von Videobildern eines Teilnehmers (10);
ein Element zum Veranlassen einer Darstellung (18) eines eingehenden Videostreams, der Darstellungen von mehreren weiteren Teilnehmern enthält, die durch eine am Kopf befestigte vergrößernden Realitätsanzeige (16), die von dem Teilnehmer (10) getragen wird, auf die Position der Kamera (14) überlagert wird, sodass ein Blickpunkt für den Teilnehmer (10) innerhalb der Darstellung (18) des eingehenden Videostreams mit der Position der Kamera (14) übereinstimmt;
ein Element zum Ermitteln aufgrund einer Richtung, aus welcher ein Ton in Bezug auf die jeweiligen Positionen der mehreren weiteren Teilnehmer innerhalb des eingehenden Videostreams kommt, dass einer von den mehreren Teilnehmern am Sprechen ist; und
Ermitteln der Augenstellung des weiteren Teilnehmers, der in dem eingehenden Videostream am Sprechen ist, sodass die Augen des weiteren Teilnehmers, der am Sprechen ist, durch die am Kopf befestigte vergrößernden Realitätsanzeige auf die Position der Kamera überlagert werden.

7. Vorrichtung (30) nach Anspruch 6, die außerdem ein Element zum Ermitteln des Blickpunkts für den Teilnehmer (10) innerhalb der Darstellung (18) des eingehenden Videostreams aufgrund einer Anzahl von Teilnehmern und ihrer relativen Positionen innerhalb des eingehenden Videostreams umfasst.

8. Vorrichtung (30) nach einem der Ansprüche 6 bis 7, wobei das Element zum Ermitteln einer Position der Kamera (14) umfasst: ein Element zum Ermitteln der Position der Kamera (14) aufgrund eines oder mehrerer Videobilder der Kamera (14), die durch die am Kopf befestigte vergrößernden Realitätsanzeige (16) erfasst wurden, aufgrund eines ausgehenden Videostreams oder aufgrund einer Sensorausgabe, welche die Position der Kamera (14) anzeigt.

9. Vorrichtung (30) nach einem der Ansprüche 6 bis 8, die außerdem umfasst:
nachdem die Kamera (14) anfänglich Videobilder des Teilnehmers (10) erfasst hat, ein Element zum Ermitteln, dass eine zweite Kamera (70) nachfolgend Videobilder des Teilnehmers (10) erfassen wird; und
ein Element zum Veranlassen einer Darstellung (18) eines eingehenden Videostreams, der durch die am Kopf befestigte vergrößernden Realitätsanzeige (16) auf die Position der Kamera (70) überlagert wird, sodass der Blickpunkt für den Teilnehmer (10) innerhalb der Darstellung des eingehenden Videostreams mit der Position der zweiten Kamera (70) übereinstimmt.

## Revendications

1. Procédé comprenant :
la réception (40) d'un flux vidéo entrant ;
la détermination (42) d'une position d'une caméra (14) configurée pour capturer des images vidéo d'un participant (10) ;
la causation (46) d'une superposition d'une représentation (18) du flux vidéo entrant, qui comprend des représentations de plusieurs autres participants, sur la position de la caméra (14) par un dispositif d'affichage de réalité augmentée monté sur la tête (16) porté par le participant (10) de sorte qu'un point focal pour le participant (10) dans la représentation (18) du flux vidéo entrant coïncide avec la position de la caméra (14) ;
la détermination qu'un des multiples autres participants parle sur la base d'une direction d'où provient le son par rapport aux positions respectives des multiples autres participants dans le flux vidéo entrant ; et
la détermination de la position des yeux de l'autre participant qui parle dans le flux vidéo entrant de sorte que les yeux de l'autre participant qui parle sont superposés sur la position de la caméra par le dispositif d'affichage de réalité augmentée monté sur la tête.

2. Procédé selon la revendication 1 comprenant en outre la détermination (44) du point focal pour le participant (10) dans la représentation (18) du flux vidéo entrant sur la base d'un certain nombre d'autres participants et de leurs positions relatives dans le flux vidéo entrant.

3. Procédé selon l'une quelconque des revendications 1 et 2, la détermination (42) d'une position de la caméra (14) comprenant la détermination de la position de la caméra sur la base d'une ou de plusieurs images vidéo de la caméra (14) capturées par le dispositif d'affichage de réalité augmentée monté sur la tête (16), d'un flux vidéo sortant ou d'une sortie capteur indiquant la position de la caméra (14).

4. Procédé selon l'une quelconque des revendications 1 à 3 comprenant en outre :
après que la caméra (14) a initialement capturé des images vidéo du participant (10), la détermination (60) qu'une seconde caméra (70) va capturer ultérieurement des images vidéo du participant ; et
la causation (62) de la superposition de la représentation (18) du flux vidéo entrant sur la position de la seconde caméra (70) par le dispositif d'affichage de réalité augmentée monté sur la tête (16) de sorte que le point focal pour le participant (10) dans la représentation (18) du flux vidéo entrant coïncide avec la position de la seconde caméra (70).

5. Produit de programme informatique comprenant au moins un support de stockage lisible par ordinateur (34) ayant des instructions de code de programme exécutables par ordinateur stockées dessus, les instructions de code de programme exécutables par ordinateur comprenant des instructions de code de programme pour, lorsqu'elles sont exécutées par au moins un processeur (32), provoquer la réalisation du procédé selon l'une quelconque des revendications 1 à 4 .

6. Appareil (30) comprenant :
des moyens pour recevoir un flux vidéo entrant ;
des moyens pour déterminer une position d'une caméra (14) configurée pour capturer des images vidéo d'un participant (10) ;
des moyens pour amener une représentation (18) du flux vidéo entrant, qui comprend des représentations de multiples autres participants, à être superposée sur la position de la caméra (14) par un dispositif d'affichage de réalité augmentée monté sur la tête (16) porté par le participant (10) de sorte qu'un point focal du participant (10) dans la représentation (18) du flux vidéo entrant coïncide avec la position de la caméra (14) ;
des moyens pour déterminer qu'un des multiples autres participants parle en fonction d'une direction d'où provient le son par rapport aux positions respectives des multiples autres participants dans le flux vidéo entrant ; et
la détermination de la position des yeux des autres participants qui parlent dans le flux vidéo entrant de sorte que les yeux de l'autre participant qui parle sont superposés sur la position de la caméra par le dispositif d'affichage de réalité augmentée monté sur la tête.

7. Appareil (30) selon la revendication 6, comprenant en outre des moyens pour déterminer le point focal pour le participant (10) dans la représentation (18) du flux vidéo entrant sur la base d'un nombre de participants et de leurs positions relatives dans le flux vidéo entrant.

8. Appareil (30) selon l'une quelconque des revendications 6 et 7, les moyens pour déterminer une position de la caméra (14) comprenant des moyens pour déterminer la position de la caméra (14) sur la base d'une ou de plusieurs images vidéo de la caméra (14) capturées par le dispositif d'affichage de réalité augmentée monté sur la tête (16), d'un flux vidéo sortant ou d'une sortie capteur indiquant la position de la caméra (14).

9. Appareil (30) selon l'une quelconque des revendications 6 à 8 comprenant en outre :
après que la caméra (14) a initialement capturé des images vidéo du participant (10), des moyens pour déterminer qu'une seconde caméra (70) va capturer ultérieurement des images vidéo du participant (10) ; et
des moyens pour amener la représentation (18) du flux vidéo entrant à être superposée sur la position de la seconde caméra (70) par le dispositif d'affichage de réalité augmentée monté sur la tête (16) de sorte que le point focal pour le participant (10) dans la représentation du flux vidéo entrant coïncide avec la position de la seconde caméra (70).
